# EUROPÄISCHE PATENTANMELDUNG

(11) **EP 0 672 558 A1**
(43) Veröffentlichungstag der Anmeldung: **20.09.1995**
(21) Anmeldenummer: 94118075.4
(22) Anmeldetag: 16.11.1994
(51) Int. Cl.: B60R 21/20, F16B 21/08, F16B 5/06

(54) **Verschlusseinrichtung zum lösbaren Verbinden zweier Bauteile**

(30) Priorität: 21.02.1994 DE 9402753 U
(71) Anmelder: CAMLOC GmbH, D-65779 Kelkheim (DE)
(72) Erfinder: Stölken, Jochen, 65719 Hofheim (DE); Hübsch, Christian, 65779 Kelkheim (DE)
(74) Vertreter: KEIL & SCHAAFHAUSEN Patentanwälte

(57) **Zusammenfassung**

Die Erfindung bezieht sich auf eine Verschlußeinrichtung zum lösbaren Verbinden zweier Bauteile (1, 2) insbesondere für die Befestigung eines Airbag (2') an einem Lenkradflansch (1') eines Kraftfahrzeugs, mit einem Verbindungszapfen (3) mit einem in zueinander ausgerichtete Öffnungen (4, 5) der Bauteile (1, 2) einsetzbaren Zapfenschaft (6), mit einem für die Abstützung an dem zweiten Bauteil (2) vorgesehenen Kopfteil (7) und mit einem auf dem Zapfenschaft (6) aufgenommenen Halteelement (8) mit radial aufgespreizten, z.B. federzungenartigen Arretierungsmitteln (9), welche beim Durchstecken durch die Öffnung (4) des ersten Bauteils (1) federnd ausweichend radial aufeinanderzu bewegbar sind und sich nach dem Durchstecken mit rückwärtigen Anschlagkanten (10) widerhakenartig hinter die Rückseite (11) des zweiten Bauteils (2) legen, welche sich dadurch auszeichnet, daß die Arretierungsmittel (9) in Arretierungsstellung durch Aussparungen (12) einer Öffnungshülse (13) hindurchragen und bei z. B. axialem Verschieben der Öffnungshülse (13) aus einer Arretierungsstellung in eine Öffnungsstellung radial bis auf einen Spreizquerschnitt zusammenfaltbar sind, welcher kleiner als der Querschnitt der Öffnung (5) in dem ersten Bauteil (1) ist.

## Beschreibung

Die Erfindung bezieht sich auf eine Verschlußeinrichtung zum lösbaren Verbinden zweier Bauteile, insbesondere für die Befestigung eines Airbag an einem Lenkradflansch eines Kraftfahrzeugs, mit einem Verbindungszapfen mit einem in zueinander ausgerichtete Öffnungen der Bauteile einsetzbaren Zapfenschaft, mit einem für die Abstützung an dem ersten Bauteil vorgesehenen Kopfteil und mit einem auf dem Zapfenschaft aufgenommenen Halteelement mit radial aufgespreizten, z.B. federzungenartigen Arretierungsmitteln, welche beim Durchstecken durch die Öffnung des zweiten Bauteils federnd ausweichend radial aufeinanderzu bewegbar sind und sich nach dem Durchstecken mit rückwärtigen Anschlagkanten widerhakenartig hinter die Rückseite des zweiten Bauteils legen.

Aufgabe der Erfindung ist es, eine derartige Verschlußeinrichtung so auszugestalten, daß bei einfachem Aufbau ein schnelles und sicheres Befestigen des einen Bauteils an dem anderen, im Bedarfsfall aber auch eine Demontage möglich ist. Diese Aufgabe stellt sich bspw. bei der Befestigung eines Airbag im Lenkrad eines Kraftfahrzeugs, welcher bisher in aufwendiger Weise durch Schraubverbindungen montiert wurde.

Die Aufgabe wird bei einer Verschlußeinrichtung der eingangs genannten Art erfindungsgemäß im wesentlichen bspw. dadurch gelöst, daß die Arretierungsmittel in Arretierungsstellung durch Aussparungen einer Öffnungshülse hindurchragen und bei axialem Verschieben der Öffnungshülse aus einer Arretierungsstellung in eine Öffnungsstellung radial bis auf einen Spreizquerschnitt zusammenfaltbar sind, welcher kleiner als der Querschnitt der Öffnung in dem ersten Bauteil ist. Mit Hilfe einer solchen Verschlußeinrichtung ist ein schnelles und sicheres Befestigen des ersten Bauteils an dem zweiten Bauteil möglich. Die Befestigung erfolgt nach dem Widerhakenprinzip und ermöglicht die Montage mit einfacher geradliniger Fügebewegung. Beim Durchstecken der z. B. an dem zweiten Bauteil montierten Verschlußeinrichtung durch die Öffnung des ersten Bauteils, z.B. eines Lenkradflansches, werden die Arrtierungsmittel zusammengefaltet. Nach dem Durchstecken durch die Öffnung des ersten Bauteils entfaltet sie sich wieder und stellen eine formschlüssige Verbindung durch Widerhakeneffekt hinter dem ersten Bauteil sicher. Das Öffnen der Verschlußeinrichtung erfolgt durch axiales Verschieben der Öffnungshülse auf dem Zapfenschaft, bspw. mit Hilfe eines gabelförmigen Werkzeugs in Richtung des ersten Bauteils, bis das Arretierungsmittel durch die Öffnung des ersten Bauteils hindurchführbar ist. Mit der erfindungsgemäßen Verschlußeinrichtung können problemlos bspw. die für die Festlegung eines Airbag (erstes Bauteil) an einem Lenkradflansch (zweites Bauteil) geforderten Zug- und Druckkräfte aufgenommen werden.

Zur Sicherung der Funktion kann die Öffnungshülse an dem Zapfenschaft geführt sein. Zu diesem Zweck hat der Zapfenschaft bspw. einen im Querschnitt erweiterten zylindrischen Abschnitt, auf welchem die Öffnungshülse axial verschieblich sitzt.

Gemäß einer besonderen Ausgestaltung der Erfindung sind die Arretiermittel von einem Spreizarme aufweisenden Federkronenelement gebildet, und die Spreizarme ragen durch die Aussparungen der Öffnungshülse hindurch. Mit einem solchen Federkronenelement läßt sich der gewünschte Widerhakeneffekt auf einfache Weise erzielen.

Mit der Erfindung wird dabei insbesondere vorgeschlagen, daß die Spreizarme einerseits in einem Haltering aus elastisch nachgiebigem Kunststoff oder Gummi befestigt sind. Der Haltering trägt dazu bei, daß sich die von den Spreizarmen gebildete Federkrone nach dem Hindurchstecken durch den kleinsten Durchmesser der Öffnung in dem ersten Bauteil entfaltet und sich die Spreizarme hinter die Rückseite des ersten Bauteils legen.

Dabei können gemäß einer weiteren Ausgestaltung der Erfindung das Halteelement und ggf. die Öffnungshülse mittels einer Sicherungsfeder gegen Axialbewegung auf dem Zapfenschaft gehalten sein. Hierdurch wird ein unerwünschtes Verschieben des Halteelements und ggf. der Öffnungshülse verhindert.

Dabei stützt sich das Halteelement bspw. unter der Wirkung der Sicherungsfeder auf einer Schulter des Zapfenschaftes ab.

Es ist auch möglich, die Sicherungsfeder mittels eines auf den Zapfenschaft vorzugsweise seitlich aufschiebbaren Halteclips vorzuspannen, um die Vibrationssicherheit zu verbessern.

Der Kopfteil kann bei einer weiteren Ausgestaltung der Erfindung ein Flanschelement aufweisen, welches durch Umbördelung mit dem zweiten Bauteil verankerbar ist. Auf diese Weise ist eine Vormontage, bspw. an dem wannenförmigen Gehäuse eines Airbags, möglich.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Es zeigen:
- Fig. 1: schematisch, teilweise längsgeschnitten, eine die Erfindung aufweisende Verschlußeinrichtung,
- Fig. 2: eine Draufsicht des als Federkrone ausgebildeten Halteelements der Verschlußeinrichtung nach Fig. 1, und
- Fig. 2a: einen Schnitt entlang der Schnittlinie a-a von Fig. 2.

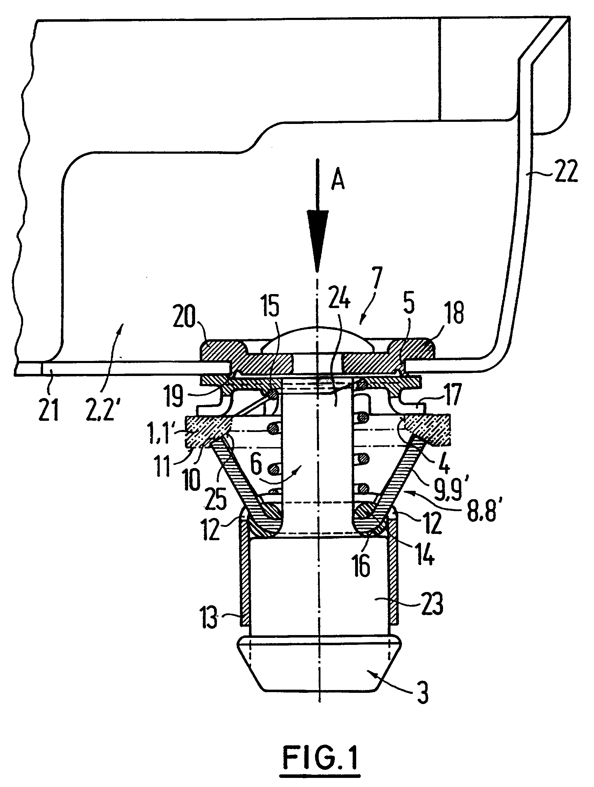

Die in Fig. 1 dargestellte Verschlußeinrichtung dient zum lösbaren Befestigen des Bauteils 2, im dargestellten Fall ein Airbags 2', an einem ersten Bauteil 1, im dargestellten Fall einer Lenkradflansch 2' eines Kraftfahrzeugs. Die Verschlußeinrichtung weist einen Verbindungszapfen 3 auf, welcher mit seinem Zapfenschaft 6 in die zueinander ausgerichteten Öffnungen 4, 5 des ersten Bauteils 1 bzw. des zweiten Bauteils 2 eingesetzt ist. Der Verbindungszapfen 3 hat einen erweiterten Kopfteil 7, welcher sich an dem zweiten Bauteil 2 abstützt. Der Kopfteil 7 weist ein Flanschelement 18 auf, welches über eine Nietverbindung mit dem einen Ende des Zapfenschaftes 6 verbunden ist und sich mit einem Flanschrand 20 auf dem zweiten Bauteil 2, im dargestellten Fall auf dem Boden 21 des wannenförmigen Gehäuses 22 des Airbag 2', abstützt. Auf der gegenüberliegenden Seite, im dargestellten Fall also auf der Unterseite des Bodens 21, ist zur Vormontage der Verschlußeinrichtung an dem zweiten Bauteil 2 das Flanschelement 18 mittels einer Umbördelung 19 an dem Boden 21 festgelegt.

Auf einem verjüngten Mittelabschnitt 24 des Zapfenschaftes 6 sitzt ein Halteelement 8, welches radial aufgespreizte, z.B. federzungenartige Arretierungsmittel 9 aufweist. Soll das zweite Bauteil 2 an dem ersten Bauteil 1 befestigt werden, wird die Verschlußeinrichtung mit dem Halteelement 8 durch die Öffnung 4 des ersten Bauteils 1 hindurchgesteckt. Die Arretierungsmittel 9 weichen beim Durchstecken des Halteelements 8 durch die Öffnung 4 des ersten Bauteils 1 federnd radial nach innen aus, bis sie die Öffnung 4 vollständig passiert haben. Danach spreizen sie sich aufgrund der Konstruktion und der Materialbeschaffenheit des Halteelements 8 wieder auf und legen sich mit rückwärtigen Anschlagkanten 10 widerhakenartig hinter die Rückseite 11 des ersten Bauteils 1. In dem dargestellten Fall ist die Öffnung 4 als konische Bohrung 25 ausgebildet, so daß die federzungenartigen Arretierungsmittel 9 mit ihren rückwärtigen Anschlagkanten 10 an dem konischen Abschnitt der Öffnung 4 sicher zur Anlage kommen.

Über das Halteelement 8 ist eine Öffnungshülse 13 derart geschoben, daß die federzungenartigen Arretierungsmittel 9 durch Aussparungen 12 der Öffnungshülse 13 hindurchragen. Die Öffnungshülse 13 ist an einem - in der Zeichnung unteren - erweiterten zylindrischen Zapfenabschnitt 23 derart geführt, daß die Öffnungshülse 13 aus der in Fig. 1 dargestellten Arretierungsstellung in Richtung des ersten Bauteils 1 (in der Zeichnung nach oben) in eine Öffnungsstellung verschoben werden kann. Bei diesem Verschieben werden die Arretierungsmittel 9 radial nach innen bis auf einen Spreizquerschnitt zusammengefaltet, welcher jedenfalls kleiner als der Querschnitt der Öffnung 4 in dem ersten Bauteil 1 ist. Das Nachinnenfalten ist möglich, weil sich an einer Schulter 16 des erweiteren Zapfenabschnitts 23, an welcher sich das Halteelement 8 abstützt, der verjüngte mittlere Zapfenabschnitt 24 anschließt, welcher ein hinreichendes Einfedern der Arretierungsmittel 9 gestattet. Ist die Öffnungshülse 13 vollständig in ihre Öffnungsstellung geschoben, kann somit das zweite Bauteil 2 zusammen mit dem an ihr montierten Verschlußeinrichtung von dem ersten Bauteil 1 abgenommen werden. Dies ist auch der Fall, wenn das zweite Bauteil 2 bspw. mittels mehrerer gleichartiger erfindungsgemäßer Verschlußeinrichtungen an dem ersten Bauteil 1 gehalten ist.

Ist das Flanschelement 18 nicht an dem zweiten Bauteil 2 umgebördelt oder wird die Umbördelung 19 beseitigt, kann die Verschlußeinrichtung auch von dem zweiten Bauteil 2 demontiert werden. Ist, wie in dem dargestellten Fall, der Aufspreizquerschnitt der Arretierungsmittel 9 in Arretierungsstellung größer als der Querschnitt der Öffnung 5 in dem zweiten Bauteil 2, wird auch in diesem Fall die Öffnungshülse 13 so weit axial verschoben, bis die Arretierungsmittel 9 auf einen Querschnitt zusammengefaltet sind, welcher durch den Querschnitt der Öffnung 5 paßt.

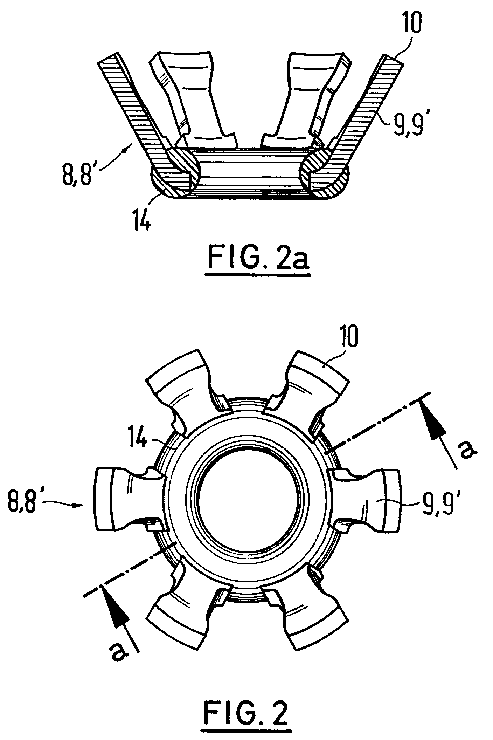

Entsprechend der Darstellung insbesondere Fig. 2 und 2a sind die Arretierungsmittel 9 von einem Spreizarm 9' aufweisenden Federkronenelement 8' gebildet, bei welchem die Spreizarme 9' mit ihrem inneren Ende an einem Haltering 14 aus elastisch nachgiebigem Kunststoff oder Gummi befestigt sind. Dieser Haltering 14 gewährleistet das Einfedern und Ausfedern der Spreizarme 9', welche bspw. zusätzlich auch noch in sich federn können.

Das Halteelement 8 und die Öffnungshülse 13 sind mittels einer als Schraubenfeder ausgebildeten Sicherungsfeder 15 gegen Axialbewegung auf dem Zapfenschaft 6 gehalten. Dies geschieht bei dem in Fig. 1 dargestellten Ausführungsbeispiel so, daß das Halteelement 8 unter der Wirkung der Sicherungsfeder 15 sich auf einer Schulter 16 des Zapfenschafts 6 abstützt. Die auf dem verjüngten Zapfenabschnitt 23 sitzende Sicherungsfeder 15 ist mittels eines zwischen den beiden Bauteilen 1, 2 auf den Zapfenschaft 6 aufgeschobenen Halteclips 17 vorgespannt. Der Halteclip 17 kann aus Kunststoff bestehen und sich auf seiner Oberseite an dem Boden 21 des zweiten Bauteils 2 und andererseits an dem ersten Bauteil 1 abstützen.

### Bezugszeichenliste:

- 1: erstes Bauteil
- 1': Lenkradflansch
- 2: zweites Bauteil
- 2': Airbag
- 3: Verbindungszapfen
- 4: Öffnung
- 5: Öffnung
- 6: Zapfenschaft
- 7: Kopfteil
- 8: Halteelement
- 8': Federkronenelement
- 9: Arretierungsmittel
- 9': Spreizarme
- 10: Anschlagkanten
- 11: Rückseite
- 12: Aussparungen
- 13: Öffnungshülse
- 14: Haltering
- 15: Sicherungsfeder
- 16: Schulter
- 17: Halteclip
- 18: Flanschelement
- 19: Umbördelung
- 20: Flanschrand
- 21: Boden
- 22: Gehäuse
- 23: Zapfenabschnitt
- 24: Mittelabschnitt
- 25: konische Bohrung

## Patentansprüche

1. Verschlußeinrichtung zum lösbaren Verbinden zweier Bauteile (1, 2) insbesondere für die Befestigung eines Airbag (2') an einem Lenkradflansch (1') eines Kraftfahrzeugs, mit einem Verbindungszapfen (3) mit einem in zueinander ausgerichtete Öffnungen (4, 5) der Bauteile (1, 2) einsetzbaren Zapfenschaft (6), mit einem für die Abstützung an dem zweiten Bauteil (2) vorgesehenen Kopfteil (7) und mit einem auf dem Zapfenschaft (6) aufgenommenen Halteelement (8) mit radial aufgespreizten, z.B. federzungenartigen Arretierungsmitteln (9), welche beim Durchstecken durch die Öffnung (4) des ersten Bauteils (1) federnd ausweichend radial aufeinanderzu bewegbar sind und sich nach dem Durchstecken mit rückwärtigen Anschlagkanten (10) widerhakenartig hinter die Rückseite (11) des zweiten Bauteils (2) legen, **dadurch gekennzeichnet**, daß die Arretierungsmittel (9) in Arretierungsstellung durch Aussparungen (12) einer Öffnungshülse (13) hindurchragen und bei z. B. axialem Verschieben der Öffnungshülse (13) aus einer Arretierungsstellung in eine Öffnungsstellung radial bis auf einen Spreizquerschnitt zusammenfaltbar sind, welcher kleiner als der Querschnitt der Öffnung (5) in dem ersten Bauteil (1) ist.

2. Verschlußeinrichtung nach Anspruch 1, **dadurch gekennzeichnet**, daß die Öffnungshülse (13) an dem Zapfenschaft (6), vorzugsweise an einem Zapfenabschnitt (23) größeren Querschnitts, geführt ist.

3. Verschlußeinrichtung nach Anspruch 1 oder 2, **dadurch gekennzeichnet**, daß die Arretierungsmittel (9) von einem Spreizarme (9') aufweisenden Federkronenelement (8') gebildet sind, und die Spreizarme (9') durch die Aussparungen (12) der Öffnungshülse (13) hindurchragen.

4. Verschlußeinrichtung nach Anspruch 3, **dadurch gekennzeichnet**, daß die Spreizarme (9') einerseits in einem Haltering (14) aus elastisch nachgiebigem Kunststoff oder Gummi befestigt sind.

5. Verschlußeinrichtung nach einem der Ansprüche 1 bis 4, **dadurch gekennzeichnet**, daß das Halteelement (8) und ggf. die Öffnungshülse (13) mittels einer Sicherungsfeder (15) in ihrer Arretierungsstellung gegen Axialbewegung auf dem Zapfenschaft (6) gehalten sind.

6. Verschlußeinrichtung nach Anspruch 5, **dadurch gekennzeichnet**, daß sich das Halteelement (8) unter der Wirkung einer Sicherungsfeder (15) auf einer Schulter (16) des Zapfenschafts (6) abstützt.

7. Verschlußeinrichtung nach Anspruch 5 oder 6, **dadurch gekennzeichnet**, daß die Sicherungsfeder (15) mittels eines zwischen den beiden Bauteilen (1, 2) auf den Zapfenschaft (6) vorzugsweise seitlich aufschiebbaren Halteclips (17) vorspannbar ist.

8. Verschlußeinrichtung nach einem der Ansprüche 1 bis 7, **dadurch gekennzeichnet**, daß der Kopfteil (7) ein Flanschelement (18) aufweist, welches durch Umbördelung (19) mit dem zweiten Bauteil (2) verankerbar ist
